# EUROPEAN PATENT APPLICATION

(11) **EP 1 473 143 A1**
(43) Date of publication of application: **03.11.2004**
(21) Application number: 03380106.9
(22) Date of filing: 02.05.2003
(51) Int. Cl.: B29C 73/02, B24B 7/24, B24B 13/015

(54) **Method and apparatus for removing scratches**

(71) Applicant: Bombardier Transportation (Technology) Germany GmbH, 13627 Berlin (DE)
(72) Inventor: Alonzo, Vicente, San Fernando de Henares ,28830 Madrid (ES); Lavi, Jose, Mostoles, 28933 Madrid (ES); Martin, Mariano, 28030 Madrid (ES)
(74) Representative: Akers, Noel James

(57) **Abstract**

The invention relates generally to the field of removing scratches from glass, particularly from windows, and especially those of public service vehicles such as trains, trams, metro vehicles and buses and also from fixed structures such as bus stops. According to this invention, scratches are removed by etching or grinding, and a film is placed on the etched or ground glass to restore transparency, to protect the glass from further scratching, and to facilitate future repairs which may then be affected by the simple removal and replacement of the film. The invention would be equally applicable to the removal of scratches from other transparent media.

## Description

The invention relates generally to a method of removing scratches, particularly from windows, and especially those of public service vehicles such as trains, trams, metro vehicles and buses. It furthermore relates to a simple apparatus for performing a grinding polishing and/or etching operation, particularly while removing such scratches, which reduces the time and skill levels required, at the same time ensuring a better coverage of the surface being ground, polished or etched and providing a better finish to the grinding, polishing or etching operation.

Windows in public service vehicles are often scratched by vandalism or by accidental and service-related damage. Usually the damage is repaired by removing and replacing the windows, which is very costly. There are techniques, described below, for repairing the damage to the windows, but they are laborious, costly and high-skill operations.

Methods of removing scratches by grinding are well known. However, when transparent surfaces are ground, then usually their transparency may be degraded or they may even become opaque. Recovery of the original clarity requires painstaking polishing and exceptional levels of cleanliness and care.

European patent number EP0191563 proposes a grinding tool with a skirt. The skirt maintains the correct distance between the tool and the surface, ensures that the pressure of application of the tool is appropriate and at the correct angle, and contains both lubrication fluids and grinding fines. EP0191563 proposes that transparency is restored by polishing the glass with a compressed wool pad, which needs to be performed expertly if the transparency of the glass is to be restored in full. The process described is a very difficult, time-consuming and laborious technique. Such techniques are generally envisaged for treatment of minor or individual scratches where substantial effort can be directed to achieving the required finish. The use of such procedures for removal of deep scratches over large areas is uneconomical both in time and in terms of the quantity of abrasive and polishing material required. Additionally, the degree of cleanliness needed to achieve acceptable transparency for windows is extremely difficult to maintain when working on large areas or complete windows. This is particularly true for the interior surface of train carriage windows where the use of large volumes of water to remove the grinding fines is inconvenient. Similar processes are described in US4622780, US4709513 and AU687319, the last of which does not include the special skirted tool.

United States patent number US 2002/0071957 also proposes the removal of scratches by grinding. A grinding paste is required in order to obtain the finish required by this method. Transparency is then restored by application of successive wet and dry coatings, including bonding primer (wet), acrylic (pre-heated to melt, then applied wet) and a polyvinyl sheet (dry). A gasket is also fitted and removed during the process. Because of the wet processes, the window needs to be maintained horizontally over a trough so that the coatings are of constant thickness, and in order not to create excessive mess through run-off. The window would normally need to be removed in order to be held horizontally. These wet processes also require drying while horizontal, for which curing processes are specified that are costly and time-consuming and require considerable amounts of specialised equipment. Moreover, the cured acrylic surface needs buffing and polishing to restore transparency and obtain a constant thickness. Finally, the required coating thicknesses are such that considerable skill and expertise is required to obtain an acceptable finish.

In the method of US 2002/0071957, the polyvinyl sheet provides a removable protective coating. As well as protecting against future damage, any damage that does occur may be removed by the simple removal and replacement of the polyvinyl sheet. However, since the acrylic base to the sheet is much softer than glass, it is expected that this acrylic base will need repair from time to time using some of the same laborious and costly processes described above.

United States patent numbers 3,993,520, 4,291,866 and 4,249,869 describe apparatus and methods for repairing windscreens in situ. These apparatus attach to the windscreen by means of suction cups and allow for the injection of resin to repair holes in one of two or more laminate panes of the windscreen. Thus the repair is restricted to a single, small, highly localised area rather than covering a general area of the windscreen. Secondly, the apparatus are not designed to permit the removal of scratches, only the injection of resin to repair damage from holes, chips and cracks. Thirdly, the repair process is a liquid injection method, whereas the present invention relates to a method that requires only the application of a film and optionally the use of separate adhesive. Fourthly, the apparatus do not allow for machining out the defects from the glass.

United States patent numbers 3,986,913 and 4,498,940 describe apparatus and methods for repairing windows by cutting out sections from them and gluing circular section pieces in the holes so created, with the window remaining in situ. There are also numerous other devices that have been developed for cutting circular discs out of windscreens or other panes of glass. In some of these, the apparatus is held onto the glass by means of suction to one side of the pane. They differ fundamentally from the present invention in that, like the resin injection apparatus and methods described above, they prescribe an entirely different repair process and the apparatus only allow the repair of a small localised area each time they are set up. In the case of these last named patents, defects are removed by cutting out the glass, rather than by repairing the damaged part of the glass itself. Moreover, all the patents that envisage cutting our discs from the glass require something to be attached to the other side of the window, whether it be the apparatus or a backing plug or plate.

All of the prior methods that include the removal of scratches while the window remains in situ have the problem that the grinding machine is heavy. This means that the operator will soon tire and will find it particularly difficult to achieve a uniform and high quality finish over large areas of glass.

The present invention seeks to solve the above problems by proposing a method of removing scratches that allows the operation to be performed with the glass or transparent medium remaining in situ, and without requiring the exceptional levels of surface finish on the glass and acrylic that are described in the prior art. To assist with this method, an apparatus is described that holds and/or guides the grinding or etching machine. Finally, since the optical surface may again be damaged, the present invention seeks to ensure that subsequent repairs are effected even more easily than the initial repair method described herein.

According to the present invention, there is disclosed a method of in situ restoring the optical properties of an optical surface having local imperfections of a height h, the method comprising the steps of applying to the surface a layer of an optical filler sufficient to substantially fill all imperfections of a height less than h and applying an optical film over the layer of optical filler.

In the context of the present invention, reference to an optical surface is intended to denote a surface which provides a generally clear image when transmitting or reflecting light. The present invention is particularly applicable to the restoration of windows, especially glass windows, and in the following, the terms window and optical surface may be used interchangeably. The term optical surface may also include windows made of other transparent materials. It may also include mirrors and other highly polished surfaces such as stone, paint, metal or plastics materials. Reference to an optical filler, is intended to denote a substance having a refractive index of comparable value to that of the optical surface to which it is applied whereby an optically smooth surface may be achieved. Similarly, in the context of the present invention, reference to an optical film is intended to denote any film or layer, which can transmit light and is sufficiently free of defects to ensure a clear result.

Preferably the filler is provided in sufficient quantities to fill all local imperfections up to a height or depth of 0.5 micron or, more preferably, it may be provided in sufficient quantities to fill all local imperfections up to a height or depth of 1 micron; even more preferably, a filler may be provided which can fill all local imperfections up to a height or depth of 5 microns or more.

According to a further aspect of the present invention, the method further comprises the step of removing local imperfections of a height greater than h prior to applying the optical filler. Such local imperfections or scratches may be removed from the glass by grinding. In the context of the present invention, grinding is used to denote grinding, polishing, sanding, etching, sandblasting or any equivalent mechanical, chemical, electromechanical, electromagnetic or optical technique which serves to remove material from the optical surface. Similarly, in the context of the present invention, reference to a grinding machine is intended to denote any machine which serves to remove material from the optical surface, such as by any means described above. Alternatively, the imperfections may be removed or reduced by other methods of modifying the optical surface without substantial removal of material, e.g. melting by heat or chemicals.

According to an advantageous embodiment of the invention the optical filler is an adhesive and serves to adhere the optical film to the surface. The optical film may be either self-adhesive or applied with a separate adhesive. The film may be either flexible or rigid and may or may not cover the entire window: in some embodiments the film is placed on only a central portion of the window, leaving the edges uncovered. Such a system also protects the glass and in case of damage may simply be removed and replaced. If such further damage were severe, scratching the glass through the film, then the entire process may be repeated. The entire operation requires less skill, time, cost and/or specialist equipment than the alternative processes referred to above, which require polishing to a high gloss finish.

One feature of this invention is that the optical surface does not need to be held horizontally at any stage in the process. The optical surface may therefore be restored in situ. The term in situ in the present context is intended to denote the position of normal use, i.e. without the requirement of removing the optical surface for treatment. In particular, this is intended to cover the possibility of treatment of inclined or substantially vertical surfaces, in particular windows. It is, however, within the scope of the present invention that the method and apparatus herein described may also be used for treatment which is not in situ. A second feature is that there is no application of a wet coating, so there is no run-off of surplus coating material. A third feature is that there is no application of heated coatings, so there is no need for heating or curing equipment and methods. A fourth feature is that only one coating is applied to the optical surface, so simplifying and shortening the process. A fifth feature is that the surface finish required from the grinding of the optical surface is not to the same level as previous methods, since the optical surface on its own is not required to be totally transparent prior to application of the optical film. A sixth feature is that, under certain conditions, the optical surface does not need grinding over its entire surface since the transparency of the optical surface after application of the film would be sufficiently homogenous over all areas, whether ground or not.

Optionally, the grinding or etching operation may be supplemented with a polishing operation, if such is found to be beneficial to the transparency of the window or to the adhesion of the surface-coating film. Optionally, there may be an initial coarse grinding operation to remove deep scratches or chips from the optical surface. Other preliminary repairs may also be carried out prior to the grinding step. Such repairs may include localised filling of deep cracks and scratches with an appropriate optical filler material, which may be the same or different to the optical filler used to adhere the optical film to the surface.

Optionally, water or another lubricating medium may be applied to the window either to lubricate the grinding operation, or such a medium may be applied to remove the residue from grinding, or to perform both functions.

According to a further aspect of the invention, there is disclosed a system for in situ grinding of generally vertical optical surfaces. The system comprises a frame, a retaining device for maintaining the frame in substantially fixed relation to the optical surface, a grinding head, and a guide arrangement movably supporting the grinding head with respect to the frame for displacement of the grinding head over substantially the entire optical surface or any part thereof.

Preferably the grinding head is a grinding, sanding or etching machine or any other machine that can serve to remove material from or otherwise modify the optical surface. The guide may consist of three or more sliding elements in two or three orthogonal axes. Two of these axes of movement enable the grinding machine to be moved across the entire surface of the window in a plane parallel to the plane of the window in such a manner as to cover the entire area that is required to be ground or etched, and as to avoid excessive coverage of any part of that area. The third (and optional) orthogonal axis enables the grinding or etching machine to be moved onto the surface of the window and held in a constant position in relation to the surface of the window so as to apply a constant pressure to the window during the grinding or etching operation.

Alternatively, the guide may comprise any arrangement which serves to support the grinding head allowing movement of the head over the optical surface. Such a guide may include one or more robotic or servo-assisted arms. The arm, under such circumstances, may be constrained or programmed to follow a particular path or to remain in a particular plane whereby a constant distance from or pressure on the window surface is maintained. When used for the removal of scratches, the provision of servo-assisted or similar mechanisms to support the weight of the grinding head while allowing free motion over the window surface is desirable. Alternatively, an arrangement (such as an arrangement of counterweights) may be provided that carries the weight of the grinding, etching, sanding or other machine while the operator moves it over the optical surface. In particular, it allows the operator to work along any particular scratch without having to support the weight of a heavy machine reducing fatigue and reducing variations in the speed of movement and in the pressure exerted on the window.

Because of the nature of the invention, inasmuch as it enables the grinding or etching of only part of the window, or inasmuch as some parts of the window are more severely damaged than others and so require heavier grinding or etching, this apparatus allows such variations in grinding or etching and the blending of this selective heavier grinding or etching into the area ground or etched more lightly.

Optionally, the retaining device holds the frame against the window by pressure on, or direct attachment to, the window, the window frame or another surface such as the wall or other surface in which the window is mounted. In a particularly advantageous embodiment, the frame may be held in position by suction cups mounted against either the window or another appropriate (and appropriately positioned) surface. Alternatively the frame may be held rigidly on the floor, on equipment mounted on the floor, or on any other mounting point. Such a system has the benefits of maintaining a substantially constant pressure on the window, of ensuring good coverage of the surface being etched or ground, and of ensuring that no areas of the window are excessively etched or ground, without requiring great operator skill.

Optionally, the system may hold the grinding or etching machine in a position and at an angle that are adjustable, to suit the particular process being undertaken from time to time. In particular, by increasing the angle, the pressure exerted by the grinding surface on the window may be increased. The grinding head may be tiltably mounted whereby tilting occurs on application of force by the operator. Alternatively, the grinding head may be lockable at a given angle in order to maintain a constant pressure. In a further alternative embodiment the grinding head may be tilted automatically under the control of an actuator or other control device.

Optionally, the guide may hold the grinding or etching machine in a floating position that can accommodate small irregularities in the surface being worked that diverge from a flat plane, thereby enabling a substantially constant force to be applied through the machine onto the surface being worked. Alternatively, the grinding machine or the grinding head itself may be adapted to accommodate such small irregularities, e.g. by the provision of suitably cushioned or flexible abrasive elements or discs or by spring-loading the grinding head. Preferably, the guide is provided with a biasing assembly adapted to urge the grinding head against the optical surface. Such a biasing assembly may enable the force between the grinding head and the optical surface to be adjusted and controlled.

Optionally, the frame or the guide may be constructed to accommodate variations intrinsic in formed and shaped surfaces such as curved windscreens. It is also particularly desirable that the frame and/or the guide can be easily adjusted to accommodate different sizes and shapes of window and window surrounds. This is particularly important when dealing with e.g. a vehicle having windows of different dimensions or shapes.

Optionally, the system may incorporate a mechanism for moving the grinding or etching machine across the surface of the window at a predetermined rate and, optionally,, on a predetermined path. These options have the benefit of reducing the skill required of the operator and could also enable the operation to be performed without close supervision after having been initially set up.

Optionally, the system may incorporate a gutter or other device for retrieving the water or other lubricating or cleaning fluid. The system may also optionally incorporate a device for applying such water or other lubricating or cleaning fluid. Such a device could be attached to the guide or to the grinding head so as to concentrate the lubrication or cleaning fluid where the window is being ground or etched. This would have the benefits of maximising lubrication and/or cleaning while minimising the quantity of fluid used. Optionally, a fluid system may be provided incorporating filtration and/or recycling systems; so as to reduce still further the amount of fluid used and the extent of waste generated by the process. Depending on the exact process and equipment used, the provision of sufficient cleaning fluid may be extremely important to the resulting quality of the finished surface.

It shall be noted that, although this system is particularly suitable for use while removing scratches from windows as described in this invention, it may also be used to hold the grinding tools referred to in the other patents cited above, and in analogous grinding processes.

Optionally, the system may be provided with a control unit that contains one or more subsystems for performing one or more additional functions. These functions may include any or all of: electrical, pneumatic or hydraulic movement of the grinding or etching machine, optionally incorporating a compressor; water or other fluid supply to the system; water or other fluid retrieval from the system or other attached fluid retrieval means; water or other fluid filtration and/or recycling; storage of clean or dirty water, other fluid and/or filtration debris; drainage of clean or dirty water, other fluid and/or filtration debris; controlling any aspect of the grinding or etching tool, the guide or associated equipment; pre-programming any aspect of the control means; monitoring any part of the equipment or process and outputting the monitoring data or any other data from the control unit. Such a control unit would preferably be portable.

According to an important aspect of the present invention when used for restoring e.g. the transparency of a glass window, the transparency is restored by the application of the optical film. This has the benefit that the glass or other transparent medium does not require polishing to such an extent that full transparency is restored but can be left partially opaque, so reducing the level of operator skill required and speeding up the process. This serves also to considerably reduce the quantity of grinding materials used. In the present context, the degree of opacity left after grinding or polishing may be determined by the ability of the optical film to restore transparency and also by the degree of acceptance of the finished product by the end user. The opacity prior to applying the film may be low such that the image seen in or through the optical surface has only a slightly milky effect. Alternatively, the opacity may be high, such that the viewed image is completely distorted or hazy as in the case of frosted glass.

Another aspect of this invention is that after application the film protects the window from further damage. This protection may be performed either by using a damage-resistant film that resists damage to itself by its own physical properties, or by using a film that will accept damage to itself but will impede damage to the window underneath. Either of these has the benefit of reducing damage to the window. A second benefit of either of these is to facilitate the repair of subsequent damage. A benefit of the damage-resistant film is to reduce the likelihood and frequency of subsequent repairs.

Another aspect of this invention is the process of repair of subsequent damage. If the film is damaged but the window below the film is not damaged, the film may be removed and replaced without substantial use of specialist tools and equipment, and in a minimum of time. If, however, the window below the film is damaged, the film may be removed and the repair method described heretofore may be performed again, either on the entire window or on a selected part of the window. Either scenario embodies significant improvements to current repair methods.

An embodiment of the present invention will now be described, by way of example only and with reference to the following figures, in which:
Figure 1 is a schematic view of a system for in situ grinding of a rail vehicle window including a control unit;
Figure 2 is a front view of an embodiment of the system of Figure 1;
Figure 3 is a view of the system of Figure 2 from above;
Figure 4 is a similar view from above of the system of Figure 2 with the grinding head angled to increase pressure; and
Figure 5 is a schematic view of a control unit according to a further embodiment of the invention.

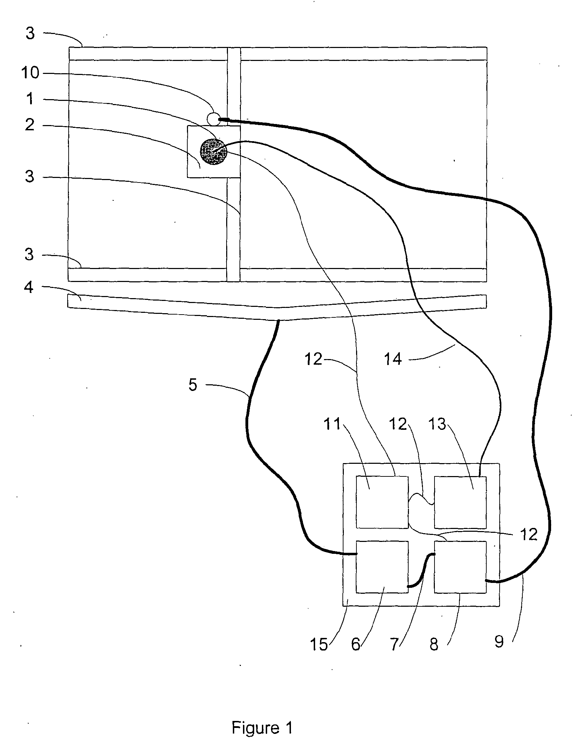

Figure 1 shows a simple manually operated system for in situ grinding of the interior surface of a rail vehicle window according to an embodiment of the present invention, incorporating a grinding machine 1. The grinding machine 1 is mounted in a head 2, which in turn is mounted in an arrangement of slideways 3 that enables the head to move freely over the entire area as required. In this embodiment the assembly 1, 2, 3 is mounted vertically over a gutter 4 which catches water flowing off the window (not shown). The water, which is mixed with the fines from the grinding operation, then flows down the hose 5 to a water tank and filtration unit 6. It is then drawn into a pump 8 through a second pipe 7. The pump propels the filtered water through a third pipe 9 to a nozzle 10 arranged on the head 2 such that the cleaning and lubricating effect of the water is maximised. The water then flows past the interface between the grinding machine 1 and the window, and back into the gutter 4.

The tank, filtration and pump system are contained within a housing unit 15, which also contains a pneumatic air compressor 13 that drives the grinding machine 1 through a hose connection 14. The housing unit 15 also contains a control system 11 which controls the grinding machine 1, the water system 4 - 10 and the air compressor 13 via cables 12.

The grinding machine 1 may be any commercially available grinding or sanding machine. Preferably, the grinding machine is of the type having a rotary disc to which may be affixed abrasive discs of appropriate coarseness. Such grinding machines known from European patent number EP0191563 which are provided with skirts for containing grinding and cooling fluids may be particularly useful. A particularly advantageous grinding system is the glass defect repair system 3M™ Trizact™. This system includes a series of abrasive films of increasing fineness which may be used sequentially. Preferably, the grinder may be provided with "on demand" centred water feed. In this case, the nozzle 10 may be attached directly to the grinding machine and supplies water to the centre of the rotating disc.

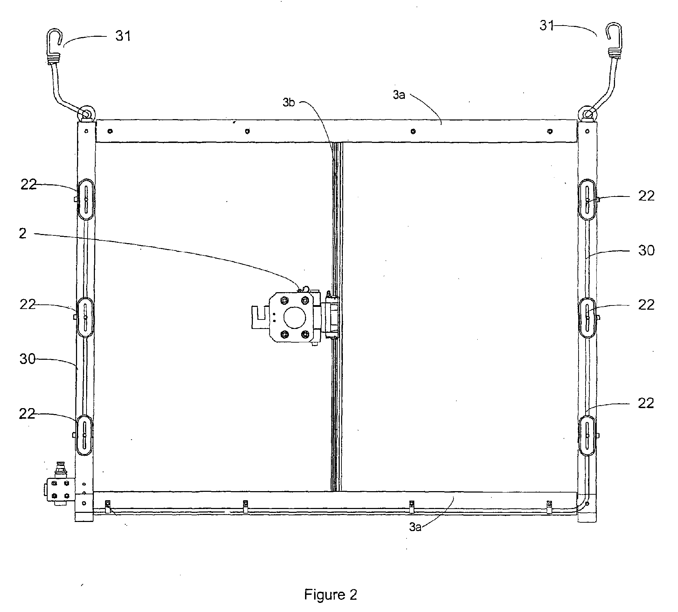

Figure 2 is a more detailed drawing of the assembly described above. A first pair of slideways or rails 3a are connected by bars 30 to form a frame corresponding generally in size to the dimensions of the window being treated. The size of this frame may optionally be larger than the window being treated, or may correspond instead generally to the size of the area of the window being treated, where such area may be substantially less than the entire window. A number of suction pads 22 and optional hooks 31 are mounted on the bars 30. The suction pads 22 serve to locate the apparatus firmly with respect to the window while the hooks serve to bear some of the weight of the apparatus when it is deployed on a substantially vertical window, so helping the suction pads 22. The suction pads 22 are of a narrow-profile design in that they are generally oval or elongate in shape such that they can locate in a narrow band adjacent to the edge of the window pane. The use of narrow-profile suction pads 22 ensures that the grinding machine 1 can reach substantially the whole surface of the window without leaving large comers and strips untreated. If desired, after grinding, the region where the suction pads 22 were located can be further ground by hand. Alternatively, a symmetrical narrow band of untreated glass may be left around the border of the window, e.g. as a decorative effect.

For windows and other optical surfaces with suitable surrounds, the suction pads 22 may locate on the window frame or surround instead of on the window pane itself. In such cases, alternative shapes, configurations and orientations of suction pad may be appropriate. The suction pads 22 are preferably provided with continuous suction supplied e.g. from a suitable vacuum supply in the housing unit 15. Alternatively, actuatable suction cups of the type used for holding glass panes may be used.

A second slideway or elongate guide 3b in the form of a vertical bar is supported between the first slideways 3a. The elongate guide 3b is provided with appropriate bearing means (not shown) allowing it to slide along the rails 3a in a horizontal direction. The head 2 is mounted on the elongate guide 3b allowing it to slide therealong in a vertical direction. According to the present embodiment, movement of the head 2 along the elongate guide 3b and movement of the elongate guide 3b along the rails 3a is by manual actuation of the operator. In order to maintain the weight of the head 2 and grinding machine 1, the elongate guide 3b is provided with indexing or locking elements (not shown) which allow the head 2 to be fixed in position vertically with respect to the elongate guide 3b. In this way, the head 2 may be traversed across along the rails 3a at a first elevation. On completion of the traverse, the locking elements may be released and the head 2 lowered and locked in a new position prior to traversing back at the new elevation.

Alternatively the orientations of the slideways may be changed; this would be particularly advantageous in the case of manual movement of the machine, as the elongate guide 3b may be oriented horizontally on vertical rails 3a. The elongate guide 3b may then be locked in position on the rails 3a and the grinding machine 1 may then be moved easily across the width of the optical surface. When the area of the optical surface thus accessible is ground to a sufficient finish, the elongate guide 3b is then moved on the rails 3a and locked into a different position on them, and the operation repeated. In this way the entire optical surface may be ground evenly, while the assembly takes the weight of the machine.

In order to ensure controlled pressure of the grinding machine 1 on the window 20, it is desirable to use a pair of rails 3a. Alternatively, one of the pair of rails 3a could be dispensed with and the elongate guide 3b could be supported only from a single rail, e.g. hanging from a rail 3a located along the upper edge of the window. Such an arrangement may be adequate to fully support the weight of the grinding machine 1. If the rail 3a is mounted in a sufficiently rigid fashion to resist torsional forces, this can also ensure a degree of constancy of the pressure exerted upon the window.

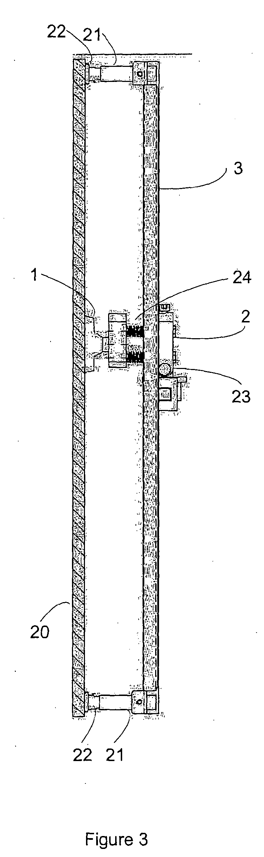

Figure. 3 is a view of the apparatus of Figure 2 as seen from above, as it is set up for e.g. a fine-polishing operation. The assembly is attached to the window 20 by suction pads 22 on legs 21, which arrangement holds the assembly rigidly in place. The head 2 incorporates a hinge arrangement 23 that allows the grinding machine 1 to operate at various angles with respect to the window 20. The head 2 also incorporates a resilient arrangement such as an arrangement of springs 24 to maintain a constant pressure between the grinding machine 1 and the glass 20.

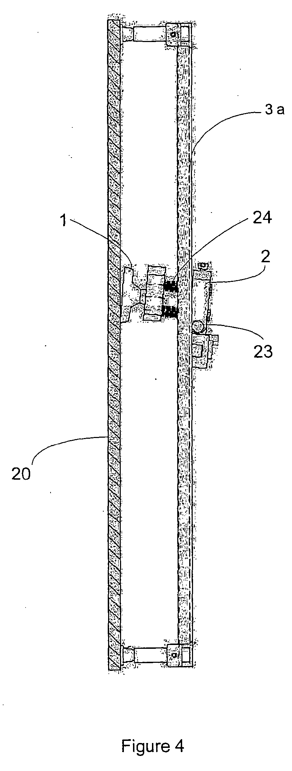

Figure 4 is a similar view to Figure 3, but with the grinding machine angled for the removal by grinding of major scratches. To achieve this, the operator tilts the head 2 about the hinge 23. This causes a reduced area of the abrasive disc of the grinding machine 1 to enter into contact with the glass 20. Since the pressure is now applied over a smaller area, the abrasive action is greater and more effective removal of deep scratches may be achieved. The head 2 and hinge 23 arrangement may be provided with stop means (not shown), which ensures that the operator cannot increase the pressure above a given value. Alternatively, the head 2 and/or hinge 23 may be provided with a lock arrangement in order to set and maintain the head at a particular angle, which cannot then be increased accidentally by the operator. Preferably, the head 2 is angled in the direction of movement of the grinding machine 1 across the window. The angle of the head according to Figure 4 would correspond to a movement of the head 2 in a direction from left to right with the elongate guide 3b sliding along the rails 3a.

While the above embodiments have been described in the context of manual movement of the grinding machine 1 and head 2, in an alternative embodiment there may be provided automated means to drive the head 2. In a preferred embodiment, these may be pneumatic actuators (not shown) controlled by the control system 11. Alternative drive arrangements using motors, belts, chains etc. may also be employed. Such drive arrangements are extremely desirable in order to improve the quality of the finished surface since, if the grinding machine is moved in an irregular fashion or left turning in one position, localised marks and depressions can result which are extremely difficult to remove even with further grinding. Furthermore, additional benefits of automated motion may include: reduced errors and faults; reduced manpower requirement, hence improved efficiency; greater machining speeds owing to improved control; and reduced amount of grinding since the automatic finish is more predictable and there is less need to over-grind in order to ensure that all areas are sufficiently ground. The head 2 itself may also be provided with pneumatic actuators or another such mechanism to angle the head 2 in response to signals from the control system 11. The angle and orientation of the head 2 may thus be precisely controlled corresponding e.g. to the direction and speed of movement and the degree of abrasion required.

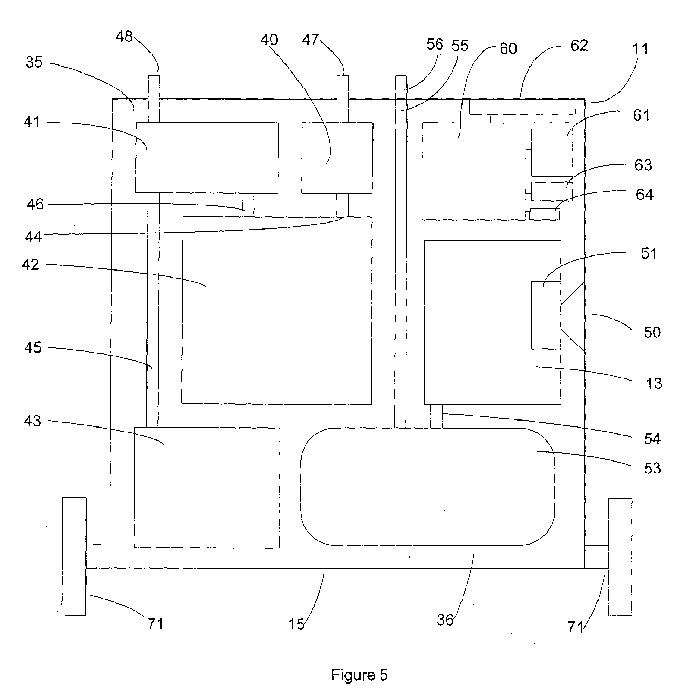

Figure 5 is a drawing of a control unit for a more sophisticated system incorporating pneumatic actuation according to a further embodiment of the present invention. The control unit comprises a water sub-system 35, an air system 36 and a control system 11. The water system 35 is for lubricating the surface between the grinding machine and the window and the air system 36 is for supplying pneumatic power to the grinding machine and actuators.

The water sub-system 35 consists of a pump 40, a filtration unit 41, a reservoir for clean water 42, a reservoir 43 for contaminants and fines extracted by the filtration unit, connecting pipes 44-46 and connectors to external hoses 47-48. The pump 40 extracts water from the clean reservoir 42 through a connecting pipe 44 and expels it at the connector 47. Dirty water returning from the gutter 4 as shown in Figure 1 enters via the connector 48 into the filtration unit 41. This filtration unit removes contaminants and particles from the water into the dirty reservoir 43 via a connection pipe 45. The filtered water is then returned via a pipe 46 to the clean reservoir 42 for reuse.

The air system 36 consists of an air inlet 50, a filter 51, a compressor 13, an air reservoir 53, connecting pipes 54-55 and a connector to an external hose 56. Air is drawn into the compressor 13 from the environment through the air inlet 50 and a filter within the compressor 51. It then passes through a pipe 54 into the air reservoir 53. Air at the correct pressure is then transferred through a second pipe 55 to an external hose (not shown) via a connector 56.

The control system 11 consists of a control computer 60, a keypad 61, a screen 62, a disk drive 63 and an inpu /output port 64. These are only some of the options that may be incorporated into the control system. The control means 11 controls the operation of the water system 35, the pneumatic system 36, the grinding machine 1 and the movement of the head 2 over the glass. Other embodiments may use other control means such as switches and dials, without recourse to a control computer.

Control commands are input to the computer via the keypad 61, via a touch-screen entry means 62, via pre-recorded diskette, CD-ROM or similar means 63 or from an external computer system via the input/output port 64. The programme and records of any particular operation may be output to another computer system, to a printer or to a recordable device via either the disk drive 63 or the input/output port 64. Data may also optionally be transferred by other means such as wireless LAN (not shown). Faults or other alarm conditions may be notified to the operator by any known technique such as alarms, flashing lights and/or alert message either shown on the screen or transmitted to a pager or a mobile telephone.

For convenience, the entire unit is housed in a single housing 15 with wheels 71 and a handle not shown for pushing, pulling or lifting the unit.

Use of the system according to the method of the invention will now be described with reference to figures 1 to 5. In an initial phase, a frame of appropriate size comprising a first pair of rails 3a and bars 30 is attached to the window to be treated by suction provided to a series of suction pads 22. In the case of scratches, which are deep enough to be felt with a fingernail, a coarse-grinding disc is initially used. A suitable coarse disc is the 3M™ Trizact ™ 268XA A35 micron-grade green disc. This is attached to the grinding machine 1 which is mounted in the head 2. The machine is operated at a speed of between 1900 and 2200 RPM (though other speeds may be appropriate, particularly if other discs are used) and an initial pass is made over the areas of the glass where deep scratches are present. In traversing the machine, the head 2 may be angled according to Figure 4 to provide increased pressure to the disc. This can be achieved manually by the operator or can be set and fixed in advance.

Alternatively, the angle may be controlled automatically by the control system using appropriate actuators. Water or other cooling/cleaning fluid is supplied by the nozzle 10, preferably to a centre feed on the grinding machine 1. This can be provided on demand by the operator who must continually check that the temperature of the disc does not become excessive. In a fully automated version, a temperature sensor may be provided either on the grinding machine or in its proximity, to monitor the temperature of the grinding disc, the glass surface or the cooling fluid and to provide feedback to the control system 11.

Grinding with the coarse disc continues until the deep scratches have disappeared. This may involve replacing the grinding disc if it has become worn. To achieve this, the grinding machine 1 is stopped and pivoted away from the glass surface 20 and the disc is exchanged. Once the initial deep scratches have been removed or if the scratches are not deep, a finer disc may then be attached to the grinding machine. A suitable finer disc is the 3M™ Trizact™ 268XA A5 micron-grade brown disc. This disc is passed over the complete area of the window until substantially all the grinding marks of the earlier disc have been removed. For operation of the finer-grade disc, the head 2 can be set for medium pressure by slightly tilting it in the direction of motion as indicated above.

Once the window has been ground completely using the finer disc, the disc may then be again exchanged for a polishing disc. A suitable polishing disc is the 3M™ Trizact™ 568XA white disc. The whole window is polished, again at a machine speed in the region of 1900 to 2200 RPM and using appropriate quantities of water to ensure adequate cooling and cleaning to remove the polishing paste resulting from the operation.

After polishing, the window is generally free of major scratches but maintains an opaque or lightly frosted effect due to the presence of minor imperfections and scratches at micron scale, most of which having been caused by the grinding process itself. During the whole grinding and polishing procedure described in this embodiment, it is important that strict cleanliness is observed, since the presence of any grinding fines from a previous grade of grinding disc can cause considerable scratches during the following finer grinding or polishing operation. To this end, adequate clean, grit-or fines-free water or fluid should be supplied and the whole pane may be carefully cleaned between individual grinding operations.

On completion of the grinding and polishing operations, the grinding machine 1 and frame 3a, 30 is removed from the window. If necessary, areas of the window which have not been subjected to grinding, such as the areas beneath the suction pads 22, may be individually ground or polished to achieve homogeneity with the remainder of the window. The whole area is then again thoroughly cleaned of any fines, liquids, dirt and any other contamination from the grinding or polishing process.

The final step in the restoration of transparency is the application of an optical filler covered by an optical film. An appropriate combination is the self adhesive film 3M™ Scotchshield ™ (3M, Trizact and Scotchshield are all trademarks of 3M, a corporation registered in the USA), whereby the optical filler is provided by the layer of adhesive on the back surface of the film. The self-adhesive optical film is cut to a size slightly larger than the area of the window to be covered. The protective cover over the adhesive is removed using clean water. Then, using a solution of appropriate detergent atomised onto both the glass and the adhesive surface, the film is applied to the window. The complete elimination of any bubbles and folds from the film requires great care. Using an appropriate, relatively stiff squeegee type rubber blade, the surface of the film is squeezed against the window eliminating such bubbles while avoiding folding or damaging the film. During this process, the outer surface of the film must be adequately lubricated with detergent to avoid snagging and scratching of film. The film can then be carefully cut to size and the edges dried and pressed down with a clean dry cloth.

After application of the optical film, the resulting transparency of the window is restored to a level comparable to the original clarity. If the underlying window has been ground and polished over its complete surface to a uniform opacity, then the resulting clarity of the restored window is also uniform. While not wishing to be bound by theory, it is believed that by matching the refractive index of the filler or adhesive to that of the window material, greater recovery of transparency can be achieved. Since frosting is caused by diffuse reflection and refraction, if the surface is covered by a material of the same refractive index, there is no interior surface to provide the diffuse reflection or refraction. Furthermore, by providing an increased thickness of the adhesive or filler layer, deeper scratches or imperfections may be adequately filled. In such circumstances, the final polishing step may be eliminated completely and the optical film may be provided after the fine-grinding step. Similarly, for different degrees of scratching, different combinations of abrasive discs may be used, each time terminating with a disc which corresponds in grade to the depth of imperfection which may be corrected using the optical film. Of significance in this context is that the perceived clarity in each case is strongly dependent on the degree of homogeneity of the window. As such, the provision of a coarse grind (e.g. micron grade 10) over the whole window may under certain circumstances be sufficient once the optical filler and film is applied. Each level of abrasive which is saved in the processing of a single window equates to a considerable saving in time, effort, material and ultimately cost when applied to all the windows of a train or fleet of trains.

In alternative cases, it may also be possible to limit the area of grinding to only those areas where deep scratches were originally present. This will depend to a certain extent upon the requirements of clarity or opacity imposed by the end user and also on the ability of the adhesive to restore the transparency of the ground area. In the case of fillers which are highly effective in filling deep scratches, it may even be possible to apply the film without any prior grinding and yet still achieve an acceptable final finish.

While the present invention has been described in the context of the 3M™ Scotchshield™ Film, other systems that perform similar functions would also be acceptable. Such films may include various other features including security, UV filters, anti glare and other effects. In particular, it is highly desirable that these films be provided with greater quantities of adhesive than is normally provided merely for the purpose of adhesion: the further adhesive serving as an effective filler according to the disclosed invention. Furthermore, while the process has been described in the context of removing scratchitti (that is, graffiti caused by scratching) from rail vehicle glass windows it may also be used on windows of other transparent or translucent materials in different situations including buses, boats, aeroplanes and other vehicles and also fixed structures such as bus shelters or telephone cabins. It is equally suitable for creating or restoring the required finish in other materials, such as polished stone or mica-based materials as are frequently used for the facades of buildings.

While the present invention has been described in the context of in situ reparation and restoration, it is equally conceivable that such principles could also be applied in a workshop environment or other situation where the window or optical surface has been removed from its normal location.

## Claims

1. A method of in situ restoring the optical properties of an optical surface having local imperfections of a height h or less, the method comprising the steps of applying to the surface a layer of an optical filler sufficient to substantially fill all imperfections of a height h or less and applying an optical film over the layer of optical filler.

2. The method according to claim 1 further comprising the step of removing local imperfections of a height greater than h prior to applying the optical filler

3. The method according to claim 2, wherein the step of removing local imperfections of a height greater than h is achieved by grinding the surface.

4. The method according to claim 3, wherein the surface is generally vertical and the grinding of the surface is achieved using a grinding head movably supported for displacement over the surface.

5. The method according to claim 2, wherein the step of removing local imperfections of a height greater than h is achieved by modification of the surface without substantial removal of material.

6. The method according to any of the claims 2 to 5, wherein the optical filler is an adhesive and the optical film is adhered to the surface.

7. The method according to claim 6, wherein the optical filler is provided as an adhesive layer on one side of the optical film.

8. The method according to any of claims 2 to 7, wherein the step of removing local imperfections of a height greater than h prior to applying the optical filler is carried out over substantially the complete surface.

9. The method according to claim 8, wherein the optical surface is a surface of a window.

10. A system for in situ grinding of generally vertical optical surfaces according to the method of any of claims 2 to 9, the system comprising a frame, a retaining device for maintaining the frame in substantially fixed relation to the optical surface, a grinding head, and a guide movably supporting the grinding head with respect to the frame for displacement of the grinding head over the requisite area of the optical surface.

11. The system according to claim 10 in which the guide movably supports the grinding head with respect to the frame for displacement of the grinding head over substantially the entire area of the optical surface

12. The system according to either claim 10 or claim 11 in which the frame comprises a rail and the guide is mounted for movement along the rail.

13. The system according to claim 12 in which the guide is an elongate member mounted generally orthogonally to the rail and the grinding head is moveable along the guide.

14. The system according to any of claims 10 to 13, further comprising a biasing assembly adapted to urge the grinding head against the optical surface.

15. The system according to claims 14, in which the biasing assembly is adjustable.

16. The system according to any of claims 10 to 15, further comprising a tilting assembly allowing tilting of the grinding head with respect to the optical surface.

17. The system according to any of claims 10 to 16, in which the retaining device comprises one or more suction cups.

18. The system according to claim 17, in which the one or more suction cups are narrow profile suction cups.

19. The system according to any of claims 10 to 18, in which the grinding head can be locked against movement in a vertical direction while allowing translation of the grinding head across the optical surface in a horizontal direction.

20. The system according to any of claims 10 to 19, further comprising a drive mechanism for effecting displacement of the grinding head over the optical surface.

21. The system according to claim 20, further comprising a controller to control the displacement of the grinding head.

22. The system according to claim 21, further comprising a device for performing one or more of the following functions:
Loading a previously recorded program into the controller;
Downloading a program from the controller;
Outputting data relating to the system;
Outputting data relating to any operation performed using the system.

23. The system according to any of claims 10 to 23, further comprising a fluid supply system for supplying fluid to the interface between the grinding head and the optical surface, for lubricating the interface and/or for removing fines or other material from such interface.

24. The system according to claim 23, further comprising a receiver to capture any fluid run-off.

25. The system according to claim 24, further comprising a device for containing, reprocessing, filtering or otherwise treating such fluid run-off.

26. The system according to any of claims 10 to 25, further comprising a power supply supplying electric, hydraulic, pneumatic, mechanical or other power to the system.

27. A system as described in any of claims 10 to 26, wherein the system is in contact with only one face of the surface, that being the surface being ground.

28. A method for removing damage or defect from a surface, comprising the steps of grinding the surface to remove the damage or defect and restoring transparency by adhering a film to the surface.

29. A method as described in claim 28, wherein the surface is of a transparent material.

30. A method as described in claim 28 or 29, wherein the film is a protective coating that protects the surface from damage.

31. A method for removing damage or defect from a surface that has already been covered with a film, comprising the steps of removing the film and adhering a new film to the surface.

32. A method as described in claim 31, further comprising repair to any damage to the surface beneath the film, which repair is effected substantially by the method as described in any of claims 1 to 8.

33. A method of removing scratchitti from a window, the method comprising:
providing a supporting frame;
attaching the supporting frame at the periphery of the window;
supporting a grinding head from the supporting frame;
grinding portions of the surface of the window with a coarse grinding medium to remove deep scratches from those portions;
grinding substantially the whole surface of the window with a fine grinding medium to produce a uniform, partially opaque finish; and
applying an adhesive film to the window to restore transparency.
